(19) Europäisches Patentamt
European Patent Office
Office européen des brevets

(11) Veröffentlichungsnummer : **0 147 581**
**B1**

(12) # EUROPÄISCHE PATENTSCHRIFT

(45) Veröffentlichungstag der Patentschrift : **01.02.89**

(51) Int. Cl.[4] : **C 22 B 26/22**, B 22 F 9/30, C 01 B 6/04, C 07 F 3/02

(21) Anmeldenummer : **84113406.7**

(22) Anmeldetag : **07.11.84**

(54) **Verfahren zur Herstellung von feinverteiltem, hochreaktivem Magnesium und dessen Verwendung.**

(30) Priorität : **09.11.83 DE 3340492**

(43) Veröffentlichungstag der Anmeldung : **10.07.85 Patentblatt 85/28**

(45) Bekanntmachung des Hinweises auf die Patenterteilung : **01.02.89 Patentblatt 89/05**

(84) Benannte Vertragsstaaten : **AT BE CH DE FR GB IT LI LU NL**

(56) Entgegenhaltungen :
**EP-A- 0 111 923**
**EP-A- 0 111 924**
**EP-B- 0 003 564**
**US-A- 3 351 646**
**US-A- 3 354 190**
**US-A- 3 388 179**
**CHEMICAL ABSTRACTS, Band 87, Nr. 18, 31. Oktober 1977, Columbus, Ohio, USA; C.M. STANDER "Kinetics of formation of magnesium hydride from magnesium and hydrogen", Seite 375, Spalte 2, Zusammenfassung 141902 d & Z. Phys. Chem., Band 104, Nr. 4-6, 1977, Seiten**
**CHEMICAL ABSTRACTS, Band 95, Nr. 18, 2. November 1981; Columbus, Ohio, USA; RIEKE et al. "Preparation of highly reactive metal powders. New procedure for the preparation of hi ghly reactive zinc and magnesium metal powders", Seite 711, Spalte 1, Zusammenfassung Nr. 1611 32 w**
**CHEMICAL ABSTRACTS, Band 81, Nr. 7, 19. August 1974, Columbus, Ohio, USA; KLABUNDE et al. "Preparation of an extremely active magnesium slurry for Grignard reagent preparations by metal atom-solvent cocondensations", Seite 393, Spalte 1, Zusammenfassung Nr. 37590 r;**

(73) Patentinhaber : **Studiengesellschaft Kohle mbH**
**Kaiser-Wilhelm-Platz 1**
**D-4330 Mülheim/Ruhr (DE)**

(72) Erfinder : **Bogdanovic, Boris, Prof. Dr.**
**Kaiser-Wilhelm-Platz 1**
**D-4330 Mülheim/Ruhr (DE)**

(74) Vertreter : **von Kreisler, Alek, Dipl.-Chem. et al**
**Deichmannhaus am Hauptbahnhof**
**D-5000 Köln 1 (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**EP 0 147 581 B1**

Jouve, 18, rue St-Denis, 75001 Paris, France

CHEMICAL ABSTRACTS, Band 77, Nr. 25, 18. Dezember 1972; Columbus, Ohio, USA; R.D. RIEKE et al. "Activated metals. I. Preparation of highly reactive magnesium metal", Seite 428, Spalte 1, Zusammenfassung Nr. 164789 e; & J. Amer. Chem. Soc., Band 94, Nr. 20, 1972, Seit

Ullmanns Enzyklopädie, 4. Auflage, Band 13, Seite 116

Die Akte enthält technische Angaben, die nach dem Eingang der Anmeldung eingereicht wurden und die nicht in dieser Patentschrift enthalten sind.

**Beschreibung**

Die Erfindung betrifft ein Verfahren zur Herstellung von feinverteiltem, hochreaktivem Magnesium und dessen Verwendung.

Aktivierte Formen von metallischem Magnesium finden in zunehmendem Maße Verwendung in den chemischen Synthesen, insbesondere für Grignard-Reaktionen, als Reduktionsmittel, für Enthalogenierungsreaktionen und dgl.; die meisten dieser Reaktionen können damit wesentlich effizienter durchgeführt werden als z. B. mit handelsüblichem Magnesiumpulver, einige Reaktionen werden dadurch überhaupt erst ermöglicht (s. z. B. Y.-H. Lai, Synthesis 585 (1981) ; W. Oppolzer in « Current Trends in Organic Synthesis », Ed. H. Nozaki, Pergamon Press 1983, S. 131). Nach R. D. Rieke kann Magnesium in einer aktiven Form durch Reduktion von Magnesiumhalogeniden mit Alkalimetallen, insbesondere mit Kalium, in Tetrahydrofuran (THF) (Acc. Chem. Res. 10, 301 (1977)) oder 1,2-Dimethoxyethan, ggf. unter Zusatz von Naphthalin als Elektronenüberträger (Arnold & Kulenović, Synth. Commun. 7, 223 (1977) ; Rieke et al., J. Org. Chem. 46 4323 (1981)), gewonnen werden. Die Nachteile dieser Methoden sind, daß aktives Magnesium in THF- bzw. 1,2-Dimethoxyethan-Suspension im Gemisch mit dem jeweiligen Alkalimetallhalogenid und meistens auch mit Alkalimetall anfällt und zur Herstellung aktiven Magnesiums auf diesem Weg äquimolare Mengen von Alkalimetall, z. B. metallischen Kaliums, notwendig sind.

Aufgabe der vorliegenden Erfindung ist es, ein Verfahren zur Herstellung von hochaktivem Magnesium zu schaffen, das nicht mit den oben genannten Nachteilen behaftet ist und sich außerdem für die Magnesiumgewinnung in größerem Maßstab eignet.

Nach US Patenten 3 351 646, 3 354 190 und 3 388 179 lagert sich metallisches Magnesium in THF an Anthracen und andere kondensierte aromatischen Ringsysteme bzw. an Butadien und andere konjugierte Diene unter Bildung der jeweiligen Magnesiumaddukte dieser Kohlenwasserstoffe, Magnesiumanthracen, Magnesiumbutadien usw., an. Wie wir gefunden haben, stehen Magnesiumanthracen. 3 THF, Magnesiumbutadien. 2 THF usw. mit ihren jeweiligen organischen Ausgangskomponenten und Magnesiummetall in temperaturabhängigem, reversiblem Gleichgewicht (Gl. 1 bzw. 2), wobei tiefe Temperaturen die Bildung von Addukten begünstigen.

Es wurde nun überraschend gefunden, daß feinteiliges, hochreaktives Magnesium, das im Lösungsmittel suspendiert ist, oder, nach entsprechender Aufarbeitung, Magnesiumpulver von extrem hoher Reaktivität entsteht, wenn man, ausgehend von Magnesium-Anthracen und/oder seinen Alkyl- oder Phenylderivaten, Magnesiumbutadien und/oder Addukten von Magnesium an andere konjugierte Diene der allgemeinen Formel $R^1—CH = CR^2—CH = CH—R^3$, in der $R^1$, $R^2$ und $R^3$ gleich oder verschieden sein können und für H, eine lineare oder verzweigte Alkylgruppe mit 1 bis 6 C-Atomen oder einen Phenylrest stehen, durch Erhöhung der Temperatur, wobei eine Verringerung der Konzentration von Anthracen und THF bzw. Dien und THF eintritt, die Verschiebung der Gleichgewichte Gl. 1 bzw. 2 von rechts nach links, die Abscheidung von metallischem Magnesium herbeiführt.

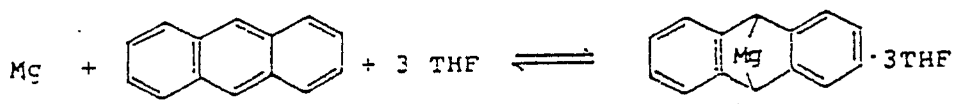
(1)

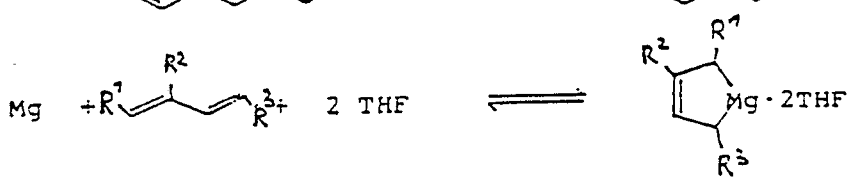
(2)

Dementsprechend betrifft die Erfindung ein Verfahren zur Herstellung von hochreaktivem, feinverteiltem Magnesium aus Magnesiumanthracen und/oder seinen Alkyl- oder Phenylderivaten, die man aus Magnesium und Anthracen oder seinen Alkyl- oder Phenylderivaten herstellt oder aus Magnesiumbutadien und/oder seinen Alkyl- oder Phenyl-Derivaten, die man aus Magnesium und einem konjugierten Dien der allgemeinen Formel $R^1—CH = CR^2—CH = CH—R^3$, in der $R^1$, $R^2$ und $R^3$ gleich oder verschieden sein können und für H, einen linearen oder verzweigten Alkylrest mit 1 bis 6 C-Atomen oder einen Phenylrest stehen, herstellt, dadurch gekennzeichnet, daß man die jeweilige Magnesium enthaltende Verbindung bei Drücken von $10^{-6}$ bis 1 bar in Abwesenheit oder in Gegenwart eines organischen aprotischen Lösungsmittels bei Temperaturen bis 300 °C thermisch zersetzt, wobei man entweder das durch die Zersetzung entstandene Magnesium als hochreaktives Pulver isoliert oder die Zersetzung in Gegenwart eines Reaktionspartners einer Folgereaktion des sich abscheidenden hochreaktiven Magnesiums vornimmt.

In einer bevorzugten Ausführungsform der vorliegenden Erfindung wird handelsübliches Magnesium gemäß Gleichung (1) mit Anthracen oder einem seiner Alkyl- oder Phenyl-Derivate oder gemäß Gleichung (2) mit einem konjugierten Dien der allgemeinen Formel $R^1—CH = CR^2—CH = CH—R^3$, in der $R^1$, $R^2$ und $R^3$ gleich oder unterschiedlich sein können und für H, eine lineare oder verzweigte Alkylgruppe mit 1 bis 6 C-Atomen oder einen Phenylrest stehen, nach an sich bekannten Methoden in THF zu Magnesiumanthracen. 3 THF, Magnesiumbutadien. 2 THF usw. umgesetzt und die so gebildete magnesiumorganische Verbindung bei erhöhter Temperatur im Vakuum oder bei Normaldruck thermolysiert.

Der bevorzugte Temperaturbereich für die Zersetzung von Magnesiumanthracen. 3 THF oder von Magnesiumaddukten an substituierte Anthracene in fester Form liegt zwischen + 70 °C und + 170 °C. Der Druck liegt dabei im Bereich von $10^{-6}$ bis $10^{-3}$ bar. In einem inerten organischen Lösungsmittel findet die Zersetzung bei Normaldruck und einer Temperatur von — 100 °C bis + 100 °C statt. Der Druck liegt dabei bei 1 bar. Als inerte organische Lösungsmittel verwendbar sind aliphatische, cycloaliphatische und aromatische Kohlenwasserstoffe, ferner offenkettige aliphatische Ether, wie Diethyl- und Dibutylether.

Die bevorzugten Reaktionstemperaturen für die Zersetzung von Magnesiumbutadien. 2 THF und von Magnesiumaddukten an gegebenenfalls substituierte konjugierte Diene, z. B. 1,4-Diphenylbutadien oder Isopren sind — 100 °C bis + 150 °C. Der Druck liegt dabei bei 1 bar. Als Lösungsmittel wird eines der oben angegebenen inerten organischen Lösungsmittel verwendet.

Anstelle von Magnesiumanthracen bzw. -butadien können zur Herstellung von feinverteiltem, reaktivem Magnesium auch Addukte des Magnesiums an ihre Alkyl- oder Phenylderivate, z. B. 1,4-Diphenylbutadien oder Isopren und anstelle von THF als Lösungsmittel 2-Methyltetrahydrofuran oder THF in Kombination mit N,N,N',N'-Tetramethylethylendiamin (TMEDA) oder 1,2-Dimethoxyethan verwendet werden.

Die Zersetzung der genannten, thermolabilen magnesiumorganischen Verbindungen kann gegebenenfalls durch Katalysatoren bzw. Promotoren beschleunigt werden, die außerdem die Beschaffenheit des aktiven Magnesiums (Korngröße und -gestalt, spezifische Oberfläche, Art und Menge der adsorbierten Stoffe) ggf. günstig beeinflussen können ; als solche Verbindungen können organische Halogenverbindungen, z. B. Ethylbromid, 1,2-Dichlorethan, 1,2-Dibromethan, und Magnesiumhalogenide verwendet werden.

Auch auf physikalischem Wege (Ultraschall, Licht, mechanische Effekte) läßt sich ggf. die Zersetzung von thermolabilen magnesiumorganischen Verbindungen zu hochreaktivem Magnesium beschleunigen.

Die Bildung von aktivem Magnesium kann in Gegenwart der Stoffe erfolgen, die mit aktivem Magnesium reagieren sollen (wie z. B. organische Halogen- oder Phosphorverbindungen) bzw. in Wechselwirkung treten sollen (z. B. anorganische Träger, an deren Oberfläche aktives Magnesium adsorbiert werden soll). In diesen Fällen kann aktives Magnesium bei noch wesentlich tieferen Temperaturen als bei + 20 °C, z. B. bei — 70 °C oder tiefer, erzeugt werden, da es durch unmittelbare Umsetzung mit den Reaktionspartnern, z. B. organischen Halogen- oder Phosphorverbindungen, laufend dem Gleichgewicht (Gleichung 1 bzw. 2) entzogen wird.

Zum Anderen können die Stoffe, mit denen das gemäß der Erfindung hergestellte hochaktive Magnesiumpulver zur Reaktion gebracht werden soll, aber auch erst nach beendeter Abscheidung des aktiven Magnesiums dem System zugeführt werden. Nach einem abgeschlossenen Cyclus der Gewinnung von aktivem Magnesium können die zurückgewonnenen organischen Bestandteile Anthracen, Butadien, THF usw. für die Aktivierung einer weiteren Magnesium-Charge eingesetzt werden, was ggf. in einem Kreislaufsystem geschehen kann.

Das nach dem erfindungsgemäßen Verfahren herstellbare aktive Magnesium zeichnet sich durch eine besonders hohe spezifische Oberfläche aus ; so z. B. beträgt die spezifische Oberfläche des durch thermische Zersetzung von Magnesiumanthracen. 3 THF in Vakuum erzeugten Magnesiums 62 $m^2/g$.

Die im Vergleich zu gewöhnlichem Magnesiumpulver hohe chemische Reaktivität des nach dem vorliegenden Verfahren erhältlichen Magnesiums geht u. a. daraus hervor, daß es in wenig reaktive C—X-Bindungen, in denen X für Heteroatome wie Halogene, Sauerstoff, Schwefel, Stickstoff, Phosphor u. dgl. steht, insertiert werden kann.

So reagiert aktives Magnesium mit Arylchloriden, die für die Grignard-Reaktion als besonders reaktionsträge gelten, in THF bereits unter milden Bedingungen und in hohen Ausbeuten zu den entsprechenden Grignard-Verbindungen. Allylchloride lassen sich mit dem nach dem erfindungsgemäßen Verfahren gewonnenen aktiven Magnesium bereits bei — 50 °C in die Grignard-Verbindungen umwandeln, wodurch sich die in herkömmlichen Grignard-Reaktionen bei höheren Temperaturen zunehmend störende Wurtz-Dimerisation der organischen Reste fast vollständig unterdrücken läßt. Zur Herstellung von Allyl-Grignardverbindungen kann bevorzugt hochreaktives Magnesium in Gegenwart der entsprechenden Allylhalogenide bei tiefen Temperaturen erzeugt werden.

Aus der Literatur ist es weiterhin bekannt (und durch eigene Kontrollversuche bestätigt), daß Isobutylchlorid mit normalem Magnesium in Kohlenwasserstoffen nicht zu Organomagnesium-Verbindungen reagiert (D. B. Malpass et al. in Kirk-Othmer, Encycl. Chem. Techn., Vol. 16, 3. Auflage, S. 555). Bei der Reaktion von Isobutylchlorid mit aktivem Magnesium, erhalten durch Thermolyse von Magnesiumanthracen, in Toluol bzw. Heptan wurde hingegen Isobutylmagnesiumchlorid in Ausbeuten von ca. 30 % gewonnen (die Versuche wurden nicht optimiert).

Die hohe Reaktionsfähigkeit des durch Thermolyse des Magnesiumanthracens bzw. Magnesiumdiens erhältlichen aktiven Magnesiums zeigt sich in besonderem Maße in dessen Spaltungsreaktion von THF unter Einschiebung des Metalls in eine Kohlenstoff-Sauerstoff-Bindung und unter Bildung des 1-Oxa-2-magnesiacyclohexans.

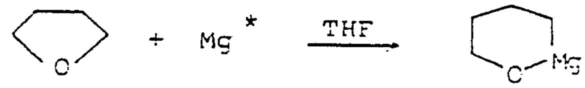

$Mg^*$ = aktives Magnesium

Übliche Magnesiumsorten gelten gegenüber THF als inert ; die Bildung des 1-Oxa-2-magnesiacyclohexans durch Spaltung von THF mit metallischem Magnesium war bisher nur beim Einsatz von « Rieke-Magnesium » (Bickelhaupt et al., Heterocycles 7, 237 (1977)) beobachtet worden.

Die Resultate mehrerer Versuche zeigen, daß 1-Halogenphospholenium-halogenide (wie z. B. 1) mit aktivem Magnesium bei niedrigeren Reaktionstemperaturen und in wesentlich höheren Ausbeuten zu den entsprechenden 3-Phospholenen (2) reduziert werden können als dies bei den bisher beschriebenen Reduktionen mit normalem Magnesium (L. D. Quinn et al., Tetr. Lett. 26, 2187 (1965)) der Fall war.

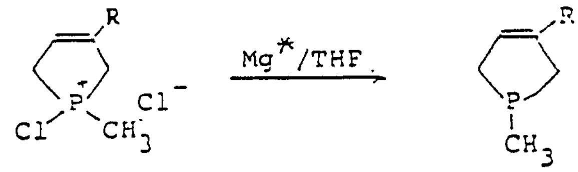


1 R = H, $CH_3$ 2

Es ist bekannt, daß metallisches Magnesium und Wasserstoff mit Magnesiumhydrid in temperaturabhängigem, reversiblem Gleichgewicht stehen :

$$Mg + H_2 \rightleftharpoons MgH_2, \Delta H = -74{,}8 \text{ kJ/mol} \quad (3)$$

Bei Raumtemperatur und Normaldruck liegt das Gleichgewicht der Gl. 3 nahezu vollständig auf Seite des Magnesiumhydrids. Bei Temperaturerhöhung steigt der Wasserstoffpartialdruck des Magnesiumhydrids und erreicht bei Temperaturen von z. B. 284 °C, 310 °C und 350 °C die Werte von 1 bzw. 2 bzw. 5,5 bar. Sowohl die Hydrierung von handelsüblichem Magnesium in Abwesenheit von Katalysatoren als auch die thermische Zersetzung des dabei entstehenden Magnesiumhydrids verlaufen jedoch sogar noch bei Temperaturen um 400 °C extrem langsam (vgl. z. B. Stander, Z. für physikal. Chem. Neue Folge 104, 229 (1977)). Außerdem entsteht bei der thermischen Zersetzung des bei hohen Temperaturen hergestellten Magnesiumhydrids Magnesiummetall von geringer chemischer Reaktivität, so daß sich dieser Weg als Methode für die Aktivierung von Magnesium kaum eignet.

Nach der europäischen Patentschrift 0 003 564 (Studiengesellschaft Kohle mbH) ist ein Verfahren bekannt geworden, das die Hydrierung von Magnesium zu Magnesiumhydrid mit Hilfe der dort beschriebenen homogenen Katalysatoren in Gegenwart eines Aktivators unter milden Bedingungen (z. B. 20 °C-60 °C/1-80 bar) gestattet.

Die hohe Reaktivität des nach dem vorliegenden Verfahren zugänglich gewordenen aktiven Magnesiums zeigt sich darin, daß es reversibel bereits oberhalb 150 °C bei Normaldruck langsam (bei 2-3 bar schnell) Wasserstoff unter Bildung von Magnesiumhydrid aufnimmt, ohne daß, wie z. B. in EP-PS 0 003 564, ein Aktivator zugesetzt werden muß. Es handelt sich hierbei um die mildesten Bedingungen, unter denen metallisches Magnesium bisher reversibel hydriert wurde. Handelsübliches Magnesium bedarf für die Hydrierung drastischer Reaktionsbedingungen.

Die Erfindung wird durch die nachstehenden Beispiele näher erläutert. Sämtliche in den Beispielen beschriebenen Versuche wurden unter Argon als Schutzgas durchgeführt.

## Beispiel 1

2.43 g (0,10 mol) des handelsüblichen Magnesiumpulvers mit einem maximalen Teilchendurchmesser von 0,3 mm (50 mesh) wurden in 0.6 l abs. THF suspendiert und die Suspension mit 32.2 g (0.18 mol) Anthracen und 0.06 ml Ethylbromid versetzt. Nach 1 h Rühren bei RT setzte die Abscheidung des orangefarbenen Niederschlags von Magnesiumanthracen ein. Die Suspension wurde weitere 48 h gerührt, filtriert, der Filterkuchen dreimal mit je 50 ml THF gewaschen und im Hochvakuum getrocknet. Erhalten wurden 36.2 g Magnesiumanthracen. 3 THF (86.5 %) als orangefarbenes, mikrokristallines Pulver.

Eine Probe von 10.20 g (24 mmol) Magnesiumanthracen. 3 THF wurde im Hochvakuum zunächst 1 h auf 100 °C erhitzt, wobei überwiegend THF abgespalten und in einer mit flüssigem $N_2$ gekühlten Vorlage kondensiert wurde. Die Temperatur wurde darauf während 4 h auf 150 °C erhöht, wobei die Abspaltung und Sublimation des Anthracens stattfand. Nach beendeter Thermolyse wurden in der mit flüssigem $N_2$ gekühlten Vorlage 4.40 g (83 %) THF (GC-Analyse) gefunden und als Sublimat 3.57 g (82 %) Anthracen gewonnen, das durch seinen Schmelzpunkt von 216 °C und GC-Analyse identifiziert wurde ; als Thermolyserückstand blieben 0.52 g (88 %) eines hochreaktiven, schwarzen, pyrophoren Magnesiumpulvers folgender Zusammensetzung (nach Elementaranalyse) : Mg 93.6, C 5.3 und H 0.9 %.

Die spezifische Oberfläche des Magnesiumpulvers (nach der BET-Methode gemessen, $N_2$ als Adsorptionsgas) betrug 62.3 $m^2/g$.

0,42 g des so erhaltenen aktiven Magnesiums nahmen bei 240 °C und Normaldruck in $H_2$-Atmosphäre innerhalb von 2 h 318 ml $H_2$ und nach insgesamt 19 h 358 ml $H_2$ (gemessen bei 20 °C und 1 bar) unter Bildung von Magnesiumhydrid ($MgH_2$) auf. Die Wasserstoffaufnahme, bezogen auf den Mg-Gehalt der Probe, betrug 92 %.

## Beispiel 2

Grignard-Verbindungen aus aktivem Magnesium : Zur Suspension von 3.05 g (117 mmol) des erfindungsgemäß erhaltenen Magnesiumpulvers in 50 ml THF wurden bei den in der Tabelle angegebenen Temperaturen unter Rühren 100 mmol des Aryl- bzw. Allylchlorids zugetropft. Nach weiteren 30 min (bei konstant gehaltener Temperatur im Fall der Arylchloride bzw. unter langsamem Erwärmen auf — 10 °C im Fall der Allylchloride) wurde in üblicher Weise mit dem jeweiligen Elektrophil umgesetzt und aufgearbeitet. Die Produkte wurden durch Vergleich ihrer Schmelz- bzw. Siedepunkte, IR- und 1H-NMR-Spektren mit Literaturdaten identifiziert.

| RCl | T (°C) | Elektrophil | Produkt | Ausbeute (%)[a] |
|---|---|---|---|---|
| $C_6H_5Cl$ | 0 | $CO_2/H_3O^+$ | $C_6H_5COOH$ | 77 |
| " | " | $ClSi(CH_3)_3$ | $C_6H_5Si(CH_3)_3$ | 67 |
| 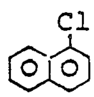 | +45 | $H_3O^+$ | 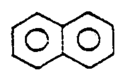 | 82 |
| $CH_2=CHCH_2Cl$ | -50 | $CO_2/H_3O^+$ | $CH_2=CHCH_2COOH$ | 83 |
| $CH_3$<br>$CH_3=CCH_2Cl$ | -50 | " | $CH_3$<br>$CH_2=CCH_2COOH$ | 72 |

[a] bez. auf eingesetztes Chlorid

## Beispiel 3

Reaktion des aktiven Magnesiums mit Tetrahydrofuran unter Bildung des 1-Oxa-2-magnesia-cyclohexans : Eine Suspension von 2.43 g (95 mmol) des erfindungsgemäß dargestellten aktiven Magnesiums in 75 ml THF wurde einige Tage am Rückfluß gekocht ; dabei wurden in bestimmten Zeitabständen der Lösung Proben entnommen, hydrolysiert und anhand der dabei erhaltenen Menge an n-Butanol (gaschromatographisch bestimmt) die Ausbeute an 1-Oxa-2-magnesia-cyclohexan ermittelt.

Gefundene Menge n-Butanol (in % d. Th.) nach angegebener Reaktionszeit (in h) : 11.4 (51), 19.6 (99) u. 25.4 % (243).

In zwei Parallelversuchen wurden Suspensionen von 2.43 g (95 mmol) des aktiven Magnesiums in 75 ml THF 8 Tage am Rückfluß gekocht, überschüssiges Metall abfiltriert und zum Filtrat bei — 78 °C 50 mmol Trimethylsilyl- bzw. Benzoylchlorid unter Rühren zugetropft.

Im Falle der Silylierung wurde anschließend 16 h am Rückfluß gekocht und THF im Vakuum (14 mbar) abgedampft ; der Rückstand wurde mit Pentan extrahiert, der Extrakt im Vakuum (14 mbar) eingedampft und die zurückbleibende Flüssigkeit bei 83° bis 85 °C/14 mbar destilliert. Erhalten wurden 3.92 g 4-Trimethylsilylbutoxytrimethylsilan (Speier, J. Am. Chem. Soc. 74, 1003 (1952)) (18 % bez. auf Mg), das durch $^1$H-NMR-Spektrum (400 MHz, in $CDCl_3$) identifiziert wurde : δ (ppm) = — 0.05 (s, 9H), 0.08 (s, 9H), 0.47 (m, 2H), 1.32 (m, 2H), 1.52 (m, 2H) u. 3.55 (t, 2H).

Im Falle der Benzoylierung wurde 30 min am Rückfluß gekocht, der nach Eindampfen bei 14 mbar/RT erhaltene Rückstand mit Eiswasser versetzt und die Mischung mit Ether extrahiert ; der Etherextrakt wurde im Vakuum bei RT eingedampft und das zurückbleibende Öl bei 80° bis 85 °C/$10^{-5}$ bar destilliert. Erhalten wurden 3.95 g 4-Benzoylbutyl-benzoat (Tsuzumi et al. Jap. Pat. 77, 102, 204 ; Chem. Abstr. 88, 50515 (1978)) (14 % bez. auf Mg.), das durch IR- und $^1$H-NMR-Spektren identifiziert wurde : IR-Spektrum (Film) : 1733 u. 1695 $cm^{-1}$ ($\gamma_{C=O}$) ; $^1$H-NMR-Spektrum (80 MHz, in $CDCl_3$) : δ (ppm) = 1.88 (m, 4H), 3.02 (m, 2H), 4.33 (m, 2H), 7.2-7.7 (m, 6H) u. 7.75-8.2 (m, 4H).

Beispiel 4

Zu einer Suspension von 0.65 g (27 mmol) des nach Beispiel 1 dargestellten aktiven Magnesiums in 100 ml Toluol wurden bei Raumtemperatur unter Rühren innerhalb von 45 min. 2.30 g (24,8 mmol) Isobutylchlorid in 30 ml Toluol zugetropft und danach das Reaktionsgemisch 2 h unter Rühren auf 70 °C erhitzt. Die Suspension wurde filtriert, der Filterkuchen mit Pentan gewaschen und im Vakuum (0.2 mbar) getrocknet, wobei 1.69 g eines Feststoffes der Zusammensetzung (nach Elementaranalyse) C 32.2, H 5.4, Mg 26.4 u. Cl 35.9 % erhalten wurden. 0.3883 g des Feststoffes lieferten bei der Protolyse mit 2-Ethyl-1-hexanol und anschliessend mit 5 N $H_2SO_4$ 50.4 ml Gas (0 °C/1 bar) der Zusammensetzung (nach MS-Analyse) : Isobutan 69.6 und $H_2$ 30.4 %. Anhand des Isobutangehaltes des Gases errechnet sich eine Ausbeute an Isobutylmagnesiumchlorid bezogen auf umgesetztes (s. unten) Isobutylchlorid von 32.7 %. In der Toluollösung wurden durch GC- bzw. GC-MS-Kopplungsanalyse 0.44 g (4.8 mol) Isobutylchlorid, 0.05 g (0.4 mmol) $C_8H_{18}$-(2 Isomere) sowie insgesamt 0.21 g (1.4 mmol) $C_{11}H_{16}$-Kohlenwasserstoffe (6 Isomere, Produkte der Friedel-Crafts-Reaktion) analysiert.

In einem Kontrollversuch zeigte käufliches Magnesiumpulver mit einem maximalen Teilchendurchmesser von 0,3 mm (50 mesh) unter den gleichen Reaktionsbedingungen (2 h, 70 °C, Toluol) mit Isobutylchlorid keinerlei Reaktion.

Beispiel 5

Der Versuch wurde ausgehend von 0.71 g (29.2 mmol) aktivem Magnesium (Beispiel 1) und 3.18 g (34.3 mmol) Isobutylchlorid in 130 ml Heptan, sonst analog wie im Beispiel 4 durchgeführt und aufgearbeitet. Nach der Filtration erhielt man 1.71 g eines Feststoffes der Zusammensetzung C 35.2, H 5.8, Mg 23.8 u. Cl 35.0 %. Die Hydrolyse von 0.3908 g des Feststoffes lieferten 30.0 ml Isobutan und 14.0 ml $H_2$ (20 °C/1 bar). Die Ausbeute an Isobutylmagnesiumchlorid bezogen auf umgesetztes (s. unten) Isobutylchlorid betrug 31.6 %. In der Heptanlösung wurden 1.50 g (16.2 mmol) Isobutylchlorid, 0.06 g (0.5 mmol) $C_8H_{18}$-Kohlenwasserstoffe (2 Isomere) und 0.7 mmol Diisobutylmagnesium (8.3 %) gefunden.

Beispiel 6

In einer mit einem Tropftrichter ausgestatteten Destillationsapparatur wurden 10.4 g (25 mmol) des wie im Beispiel 1 beschrieben dargestellten Magnesiumanthracen. 3 THF in 300 ml Toluol vorgelegt ; nach 0.5 h Rühren bei RT verfärbte sich die ursprünglich orangefarbene Suspension nach grüngelb. Die Suspension wurde langsam bis zur Siedetemperatur der Mischung erhitzt, dabei war ab ca. 70 °C die Abscheidung eines metallisch-grauen Magnesiumpulvers zu beobachten. Im Laufe von 2 h wurde 538 ml Toluol abdestilliert, wobei, in gleichem Maße wie das Lösungsmittel destillierte, frisches hinzugetropft wurde. Das ausgeschiedene Magnesiumpulver wurde filtriert, mit Toluol und Pentan gewaschen und im Vakuum (0.2 mbar) getrocknet. Erhalten wurden 0.85 g (71 % d. Th.) eines aktiven Magnesiumpulvers, das noch Anthracen enthielt. Im abdestillierten Toluol wurden 5.23 g THF (97.4 d. Th.) und im Filtrat 4.25 g (96 d. Th.) Anthracen gaschromatographisch nachgewiesen.

Beispiel 7

In einer Destillationsapparatur, ausgestattet mit einem Gaseinleitungsrohr, wurden 14.7 g (66 mmol) Magnesiumbutadien. 2 THF (hergestellt nach Fujita et al. J. Organometal. Chem. 113, 201 (1976)) in 300 ml Toluol vorgelegt. Bei Aufwärmen der Suspension bis zur Siedetemperatur unter Durchleiten von Argon war zwischen 50° und 80 °C die Abscheidung des metallisch grauen Magnesiumpulvers zu beobachten. Innerhalb von 90 min wurden im Argonstrom 173 ml Toluol im Gemisch mit THF überdestilliert ; die bei der Destillation entstehenden gasförmigen Produkte (Butadien) wurden in einer an die Apparatur angeschlossenen Kühlfalle (— 78 °C) aufgefangen. Das ausgeschiedene Magnesiumpulver wurde filtriert, mit Toluol und Pentan gewaschen und im Vakuum (0.2 mbar) getrocknet. Erhalten wurden 1.48 g (92 % d. Th.) eines aktiven Magnesiumpulvers mit 100 % Mg. Im abdestillierten Toluol wurden 6.2 g THF und 0.2 g Butadien und im Kondensat der Kühlfalle 1.0 g THF und 1.4 g Butadien nachgewiesen.

Beispiel 8

Zu einer Suspension von 8.4 g (20 mmol) Magnesiumanthracen. 3 THF in 50 ml Toluol wurde bei 0 °C und unter Rühren innerhalb von 30 min eine Lösung von 2.2 g (20 mmol) Ethylbromid in 10 ml Toluol zugetropft. Man ließ die Suspension unter Rühren sich auf Raumtemperatur aufwärmen und filtrierte sie anschließend von ausgeschiedenem Anthracen ab. 20.0 ml (von insgesamt 60.0 ml) der Lösung lieferten nach Abdampfen des Toluols in Vakuum (0.2 mbar) und Hydrolyse des Rückstandes mit Wasser 136 ml (gemessen bei 20 °C, 1 bar) Ethan (nach MS-Analyse), entsprechend einer Ausbeute an Ethylmagnesiumbromid von 85 %.

Beispiel 9

Der Versuch wurde unter Verwendung von 10.5 g (25 mmol) Magnesiumanthracen. 3 THF, 1.9 g (25 mmol) Allylchlorid und 60 ml THF analog wie im Beispiel 8 durchgeführt. Die Ausbeute an Allylmagnesiumchlorid, bestimmt anhand der bei der Hydrolyse entstandenen Menge Propen, betrug 91 %.

Beispiel 10

Der Versuch wurde unter Verwendung von 4.1 g (9,8 mmol) Magnesiumanthracen. 3 THF, 0.75 g (9.8 mmol) Allylchlorid und 60 ml Ether analog wie im Beispiel 8 durchgeführt. Die Ausbeute an Allylmagnesiumchlorid, bestimmt anhand der bei der Hydrolyse entstandenen Menge Propen, betrug 98 %.

Beispiel 11

Der Versuch wurde unter Verwendung von 8.4 g (20 mmol) Magnesiumanthracen. 3 THF, 1,5 g (20 mmol) Allylchlorid und 60 ml Toluol analog wie im Beispiel 8 durchgeführt. Die Ausbeute an Allylmagnesiumchlorid, bestimmt anhand der bei der Hydrolyse entstandenen Menge Propen, betrug 81 %.

Beispiel 12

Zu einer Suspension von 9.6 g (23 mmol) Magnesiumanthracen. 3 THF in 100 ml THF wurde bei —70 °C und unter Rühren innerhalb von 1 Std. eine Lösung von 1.76 g (23 mmol) Allylchlorid in 40 ml THF zugetropft, wobei sich das Reaktionsgemisch tiefblau färbte ; anschliessend wurde die tiefblaue Suspension 8 Stdn. bei —70 °C gerührt. Bei der Protolyse des Reaktionsgemisches durch Zugabe von 5 ml Methanol bei —70 °C erhielt man 370 ml (gemessen bei 20 °C, 1 bar) Propen (MS-Analyse), entsprechend einer Ausbeute an Allylmagnesiumchlorid bei einer Reaktionstemperatur von —70 °C von 67 %.

**Patentansprüche**

1. Verfahren zur Herstellung von hochreaktivem, feinverteiltem Magnesium aus Magnesiumanthracen und/oder seinen Alkyl- oder Phenylderivaten, die man aus Magnesium und Anthracen oder seinen Alkyl- oder Phenylderivaten herstellt oder aus Magnesiumbutadien und/oder seinen Alkyl- oder Phenyl-Derivaten, die man aus Magnesium und einem konjugierten Dien der allgemeinen Formel $R^1—CH=CR^2—CH=CH—R^3$, in der $R^1$, $R^2$ und $R^3$ gleich oder verschieden sein können und für H, einen linearen oder verzweigten Alkylrest mit 1 bis 6 C-Atomen oder einen Phenylrest stehen, herstellt, dadurch gekennzeichnet, daß man die jeweilige Magnesium enthaltende Verbindung bei Drücken von $10^{-6}$ bis 1 bar in Abwesenheit oder in Gegenwart eines organischen aprotischen Lösungsmittels bei Temperaturen bis 300 °C thermisch zersetzt, wobei man entweder das durch die Zersetzung entstandene Magnesium als hochreaktives Pulver isoliert oder die Zersetzung in Gegenwart eines Reaktionspartners einer Folgereaktion des sich abscheidenden hochreaktiven Magnesiums vornimmt.

2. Verfahren nach Anspruch 1, dadurch gekennzeichnet, daß man die Zersetzung von Magnesiumanthracen. 3 THF oder dessen Alkyl- oder Phenyl-Derivaten in Abwesenheit eines Lösungsmittels bei + 70 °C bis + 170 °C und einem Druck von $10^{-6}$ bis $10^{-3}$ bar durchführt.

3. Verfahren nach Anspruch 1, dadurch gekennzeichnet, daß man die Zersetzung von Magnesiumanthracen. 3 THF oder dessen Alkyl- oder Phenyl-Derivaten in einem aliphatischen, cycloaliphatischen oder aromatischen Kohlenwasserstoff oder in einem offenkettigen aliphatischen Ether, bevorzugt Diethyl- oder Dibutylether, bei —100 °C bis + 100 °C und einem Druck von 1 bar durchführt.

4. Verfahren nach Anspruch 1, dadurch gekennzeichnet, daß man die Zersetzung von Addukten des Magnesiums an konjugierte Diene der allgemeinen Formel $R^1—CH=CH^2—CH=CH—R^3$, in der $R^1$, $R^2$ und $R^3$ die oben angegebene Bedeutung haben, in einem aliphatischen, cycloaliphatischen oder aromatischen Kohlenwasserstoff oder in einem offenkettigen aliphatischen Ether, bevorzugt Diethyl- oder Dibutylether, bei —100 °C bis + 150 °C und einem Druck von 1 bar durchführt.

5. Verfahren nach Ansprüchen 1 bis 4, dadurch gekennzeichnet, daß man gegebenenfalls als Promotoren bzw. Katalysatoren für die Zersetzung von Magnesiumanthracen oder seinen Derivaten oder Magnesiumbutadien oder seinen Derivaten Ethylbromid, 1,2-Dichlorethan, 1,2-Dibromethan und Magnesiumhalogenide verwendet.

6. Verwendung von nach Ansprüchen 1 bis 5 hergestelltem feinverteiltem hochreaktivem Magnesium zur Insertion von Magnesium in wenig reaktive —C—X-Bindungen, wobei X für die Heteroatome Halogene, Sauerstoff, Schwefel, Stickstoff, Phosphor steht und die entstehende magnesium-organische Verbindung in einer Folgereaktion nach an sich bekannten Methoden verwendet werden kann, sowie zur reversiblen Herstellung von aktivem Magnesiumhydrid $MgH_2$ durch Umsetzung mit molekularem Wasserstoff bei 150 °C bis 250 °C und Drücken von 1 bis 2 bar.

## Claims

1. A process for the preparation of highly reactive, finely divided magnesium from magnesium anthracene and/or its alkyl or phenyl derivatives prepared from magnesium and anthracene or the alkyl or phenyl derivatives thereof or from magnesium butadiene and/or its alkyl or phenyl derivatives prepared from magnesium and a conjugated diene corresponding to the general formula $R^1-CH=CR^2-CH=CH-R^3$ in which $R^1$, $R^2$ and $R^3$ may be identical or different and denote H, a linear or branched alkyl group with 1 to 6 carbon atoms or a phenyl group, characterised in that the compound containing magnesium is thermolysed at pressures of from $10^{-6}$ to 1 bar in the absence or presence of an organic aprotic solvent at temperatures of up to 300 °C, the magnesium resulting from the decomposition being either isolated as a highly reactive powder or the decomposition being carried out in the presence of a reactant of a secondary reaction of the highly reactive magnesium precipitated.

2. A process according to claim 1, characterised in that the decomposition of magnesium anthracene. 3 THF or its alkyl or phenyl derivatives is carried out in the absence of a solvent at from + 70 °C to + 170 °C and a pressure of from $10^{-6}$ to $10^{-3}$ bar.

3. A process according to claim 1, characterised in that the decomposition of magnesium anthracene. 3 THF or its alkyl or phenyl derivatives is carried out in an aliphatic, cycloaliphatic or aromatic hydrocarbon or in an open chained aliphatic ether, preferably diethyl or dibutyl ether, at from — 100 °C to + 100 °C at a pressure of 1 bar.

4. Process according to claim 1, characterised in that the decomposition of adducts of magnesium on conjugated dienes corresponding to the general formula $R^1-CH=CR^2-CH=CH-R^3$ in which $R^1$, $R^2$ and $R^3$ have the meanings indicated above is carried out in an aliphatic, cycloaliphatic or aromatic hydrocarbon or in an open chain aliphatic ether, preferably diethyl or dibutyl ether, at from — 100 °C to + 150 °C and a pressure of 1 bar.

5. A process according to claims 1 to 4, characterised in that ethyl bromide, 1,2-dichloroethane, 1,2-dibromoethane and magnesium halides are optionally used as promoters or catalysts for the decomposition of magnesium anthracene or its derivatives or magnesium butadiene or its derivatives.

6. The use of finely divided, highly reactive magnesium prepared according to claims 1 to 5 for the insertion of magnesium into poorly reactive C—X bonds, wherein X stands for the hetero atoms, halogens, oxygen, sulphur, nitrogen and phosphorus, and the organomagnesium compound obtained may be used in a secondary reaction by known methods, and for the reversible preparation of active magnesium hydride $MgH_2$ by a reaction with molecular hydrogen at from 150 °C to 250 °C and pressures of from 1 to 2 bar.

## Revendications

1. Procédé de production de magnésium sous forme finement divisée et très active, à partir de magnésium anthracène et/ou de ses dérivés alkyliques ou phényliques, que l'on produit à partir de magnésium et d'anthracène ou de ses dérivés alkyliques ou phényliques ou bien à partir de magnésiumbutadiène et/ou de ses dérivés alkyliques ou phényliques, que l'on prépare à partir de magnésium et d'un diène conjugué de formule générale $R^1-CH=CR^2-CH=CH-R^3$ (dans laquelle les symboles $R^1$, $R^2$ et $R^3$ peuvent être identiques ou différents et représentent chacun H, un reste alkyle linéaire ou ramifié ayant 1 à 6 atomes de carbone, ou un reste phényle), procédé caractérisé en ce qu'on décompose thermiquement, à des températures allant jusqu'à 300 °C, le composé correspondant contenant du magnésium, sous des pressions de $10^{-6}$ à 1 bar, en l'absence ou en présence d'un solvant organique aprotique, en isolant sous forme d'une poudre hautement réactive, le magnésium résultant de la décomposition ou bien en effectuant la décomposition en présence d'un corps participant à une réaction subséquente du magnésium très réactif qui se sépare.

2. Procédé selon la revendication 1, caractérisé en ce qu'on conduit la décomposition du magnésium anthracène. 3 THF, ou de ses dérivés alkyliques ou phényliques, en l'absence d'un solvant, à + 70 °C jusqu'à 170 °C et sous une pression de $10^{-6}$ à $10^{-3}$ bar.

3. Procédé selon la revendication 1, caractérisé en ce qu'on conduit la décomposition de magnésium anthracène. 3 THF ou de ses dérivés alkyliques ou phényliques, dans un hydrocarbure aliphatique, cyclo-aliphatique ou aromatique ou dans un éther aliphatique en chaîne ouverte, de préférence l'éther de diéthyle ou de dibutyle, à — 100 °C jusqu'à 100 °C et sous une pression d'un bar.

4. Procédé selon la revendication 1, caractérisé en ce qu'on effectue la décomposition de produits d'addition de magnésium sur des diènes conjugués de formule générale $R^1-CH=CR^2-CH=CH-R^3$, dans laquelle $R^1$, $R^2$ et $R^3$ ont le sens indiqué ci-dessus, dans un hydrocarbure aliphatique, cyclo-aliphatique ou aromatique ou dans un éther aliphatique à chaîne ouverte, de préférence l'éther de diéthyle ou de dibutyle, à des températures de — 100 °C à + 150 °C et sous une pression d'un bar.

5. Procédé selon les revendications 1 à 4, caractérisé en ce qu'on utilise éventuellement comme promoteurs ou catalyseurs, pour la décomposition du magnésium anthracène ou de ses dérivés ou du

magnésium butadiène ou de ses dérivés, le bromure d'éthyle, le 1,2-dichloroéthane, le 1,2-dibrométhane et des halogénures de magnésium.

6. Utilisation du magnésium, hautement réactif et finement divisé, préparé selon les revendications 1 à 5 pour insérer le magnésium dans des liaisons —C—X peu réactives, où X représente les hétéro-atomes halogènes, oxygène, soufre, azote, phosphore et le composé organomagnésium résultant peut servir, selon des méthodes connues en elles-mêmes, dans une réaction subséquente, ainsi que pour la production réversible de l'hydrure de magnésium $MgH_2$ actif par réaction avec de l'hydrogène moléculaire à des températures de 150 °C à 250 °C et sous des pressions d'1 à 2 bars.